# EUROPEAN PATENT APPLICATION

(11) **EP 1 571 807 A1**
(43) Date of publication of application: **07.09.2005**
(21) Application number: 05004661.4
(22) Date of filing: 03.03.2005
(51) Int. Cl.: H04M 1/02

(54) **Camera lens assembly and portable terminal having the same**

(30) Priority: 03.03.2004 KR 2004014212
(71) Applicant: SAMSUNG ELECTRONICS CO., LTD., Gyeonggi-do (KR)
(72) Inventor: Park, Sung-Sun c/o Samsung Electronics Co. Ltd, Suwon-si, Gyeonggi-do (KR); Bae, Jong-Gun c/o Samsung Electronics Co. Ltd, Suwon-si, Gyeonggi-do (KR)
(74) Representative: Lang, Johannes

(57) **Abstract**

A portable terminal (1) has a camera lens assembly (100) including a lens housing (101) formed at one end thereof with an opening (111a). The camera lens assembly (100) is rotatably accommodated in the portable terminal (1) so that the lens housing (101) selectively protrudes from an outer peripheral surface of the portable terminal (1). The opening (111a) is exposed to an exterior when the lens housing (101) protrudes out of the outer peripheral surface of the portable terminal. The user opens the opening (111a) for exposing the lens housing (101) only when it is necessary to use the camera lens assembly (100). The opening (111a) is shielded by means of the lens cover (102) when the camera lens assembly (100) is not in use. Consequently, performance of the camera element is not degraded by external light.

## Description

### PRIORITY

This application claims the benefit under 35 U.S.C. § 119(a) of Korean Patent Application Serial No. 2004-14212, filed on March 3, 2004, entitled "Camera Lens Assembly And Portable Terminal Having the Same," the entire disclosure of which is hereby incorporated by reference.

### BACKGROUND OF THE INVENTION

### Field of the Invention:

The present invention relates to a portable terminal. More particularly, the present invention relates to a camera lens assembly and a portable terminal having the same.

### Description of the Related Art:

In general, a "portable terminal" refers to a mobile communication apparatus allowing users to make wireless communication with a base station, other users, or a mobile communication provider while carrying the portable terminal. In the early stages of mobile service, the mobile terminal simply provided users with a voice communication service and a short message transmitting/receiving service. However, as communication technology has developed, the mobile terminal now can provide users with image communication services, a moving picture service, and a mobile banking service in addition to the basic voice communication services.

As image communication and moving picture services have extensively spread, the camera lens assembly has become an essential element for the portable terminal. In addition, development of camera element manufacturing techniques makes it possible to install a camera lens assembly with a million or more pixel resolution in the portable terminal.

Camera lens assemblies include a fixed-type camera lens assembly which is fixedly installed on the portable terminal. Additionally, camera lens assemblies include a rotary-type camera assembly which is rotatably installed on the portable terminal. In general, the fixed-type camera lens assembly is typically aligned in opposition to a display unit of the portable terminal. Thus, the user can view a subject being photographed through a screen of the display unit while photographing the subject. In contrast, the rotary-type camera assembly is configured to diversify the photographing directions of the portable terminal as compared to the fixed-type camera assembly. Thus, the installation position of the rotary-type camera assembly can be variously selected in the portable terminal. Such a rotary-type camera assembly of the portable terminal is disclosed in U.S Patent Application No. 2003-109232 filed on June 12, 2003, the entire disclosure of which is hereby incorporated by reference.

A camera device of a conventional camera lens assembly used to photograph an image is always exposed to external light. Since the camera device with a million or more pixel resolution is more sensitive to light then the conventional camera device, the sensitivity of the camera device degrades. For this reason, not only is the sharpness of a photographed image degraded, but also colors are not clearly reproduced.

Accordingly, there is a need for a portable terminal having a camera lens assembly equipped with a lens cover to protect the camera element by shielding external light from the camera element when the camera lens assembly is not in use.

### SUMMARY OF THE INVENTION

An aspect of the present invention is to solve at least the above problems and/or disadvantages and to provide at least the advantages described below. Accordingly, an aspect of the present invention is to provide a camera lens assembly and a portable terminal having the same. The camera lens assembly is equipped with a lens cover in order to protect a camera element by shielding external light from the camera element when the camera lens assembly is not in use.

In order to accomplish the above object, there is provided a camera lens assembly for a portable terminal having an outer peripheral surface. The camera lens assembly comprises a lens housing formed at one end thereof with an opening. The lens housing is rotatably accommodated in the portable terminal so that the lens housing selectively protrudes from an outer peripheral surface of the portable terminal. Consequently, the opening is exposed to an exterior when the lens housing protrudes out of the outer peripheral surface of the portable terminal.

In addition, an aspect of the present invention provides a portable terminal comprising a body having a recess and a camera lens assembly including a lens housing formed at one end thereof with an opening. The camera lens assembly is rotatably accommodated in the recess formed in the body so that the lens housing selectively protrudes from an outer peripheral surface of the portable terminal. A lens cover surrounds at least one surface, both sides and one end of the lens housing and is rotatably accommodated in the recess.

Other objects, advantages, and salient features of the invention will become apparent to those skilled in the art from the following detailed description, which, taken in conjunction with the annexed drawings, discloses preferred embodiments of the invention.

### BRIEF DESCRIPTION OF THE DRAWINGS

The above and other objects, and features, and advantages of certain embodiments of the present invention will be more apparent from the following detailed description taken in conjunction with the accompanying drawings, in which:
FIG. 1 is a perspective view illustrating a camera lens assembly and a portable terminal having the same in accordance with an embodiment of the present invention;
FIG. 2 is a perspective view illustrating the portable terminal shown in FIG. 1, in which a folder and a camera lens assembly of the portable terminal have been rotated;
FIG. 3 is a perspective view illustrating a portable terminal shown in FIG. 2, in which a folder of the portable terminal has been completely rotated;
FIG. 4 is a side view of a portable terminal shown in FIG. 3;
FIG. 5 is a perspective view illustrating a structure of a camera lens assembly shown in FIG. 1;
FIG. 6 is a perspective view illustrating an internal structure of a potable terminal equipped with a camera lens assembly shown in FIG. 5;
FIG. 7 is a partially sectional perspective view of a camera lens assembly taken along line A-A' shown in FIG. 6;
FIGS. 8 and 9 are perspective views illustrating operational states of a camera lens assembly shown in FIG. 5;
FIG. 10 is a perspective view illustrating an internal structure of a portable terminal equipped with a camera lens assembly in accordance with another embodiment of the present invention;
FIG. 11 is a perspective view illustrating a camera lens assembly in accordance with another embodiment of the present invention and a portable terminal having the same; and
FIG. 12 is a perspective view illustrating a camera lens assembly of a portable terminal shown in FIG. 11.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for conciseness.

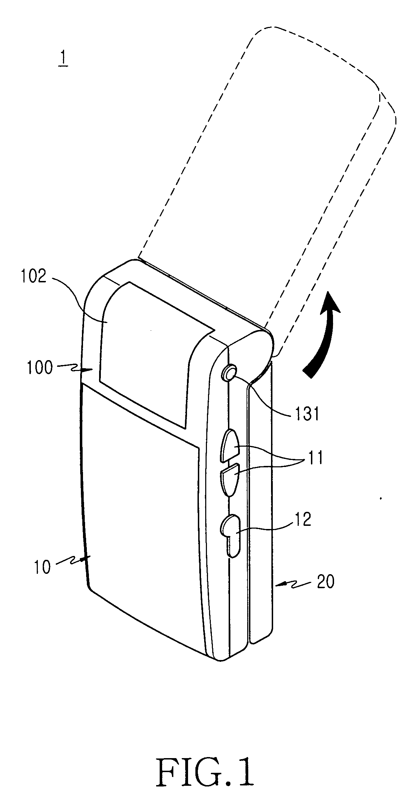

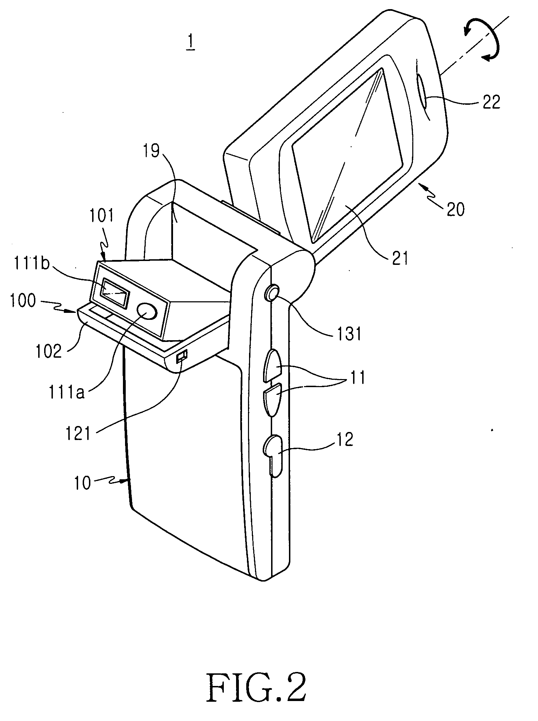

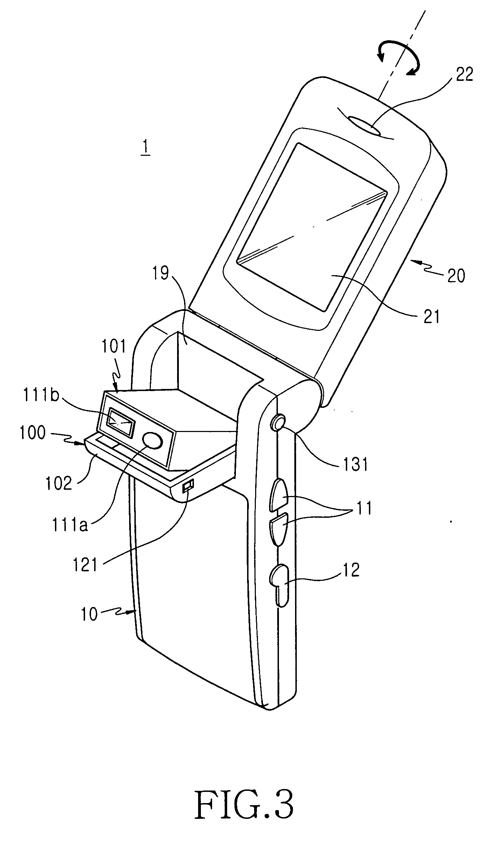

Referring to FIGS. 1-4, a portable terminal 1 having a camera lens assembly 100 according to the exemplary embodiments of the present invention includes a body 10 and a folder 20. The camera lens assembly 100 is installed on the body 10 of the portable terminal 1.

The body 10 is provided on a front surface thereof with a keypad and a microphone (not shown). A volume control key 11 and an ear-microphone jack 12 are installed on a side of the body 10. In addition, the camera lens assembly 100 is rotatably installed on a rear surface of the body 10. A recess 19 is formed on a rear upper portion of the body 10 in order to receive the camera lens assembly 100 therein. When the camera lens assembly 100 is not in use, the camera lens assembly 100 is accommodated in the recess 19 so that a lens section of the camera lens assembly 100 is not exposed. If it is necessary to use the camera lens assembly 100, the user pushes an actuating button 131 provided on a side of the body 10, so that a predetermined bias force is applied to the camera lens assembly 100. Accordingly, the camera lens assembly 100 is rotated and protrudes from the body 10. Thus, the user can use the camera lens assembly 100.

The folder 20 is provided on a front surface thereof with a display unit 21. A receiver 22 is rotatably coupled to a front upper end of the body 10. That is, the folder 20 rotatably moves closer to or away from the body 10 while facing the body 10. In addition, in a state that the folder 20 is completely open, the folder 20 is preferably rotated at an angle of about 180 degrees so that the front surface and rear surface of the folder 20 are mutually reversed. That is, the display unit 21 can be directed reversely to or towards a photographing direction of the camera lens assembly 100. Accordingly, when the display unit 21 is directed reversely to the photographing direction of the camera lens assembly 100, the user can photograph the subject while viewing the subject displayed in the display unit 21. In addition, when the display unit 21 is directed towards the photographing direction of the camera lens assembly 100, it is possible to photograph the user by himself/herself and image communication may be easily conducted by using the portable terminal 1.

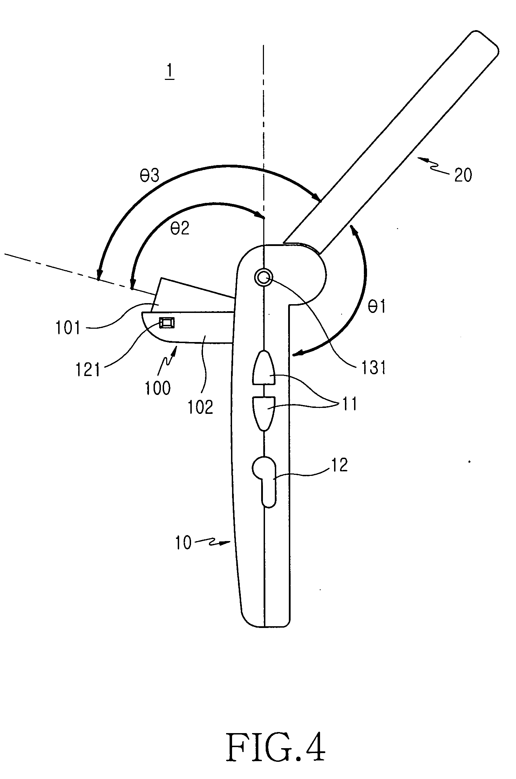

Referring to FIG. 4, an opening angle (θ₁) of the folder 20 with respect to the body 10 is in a range of about 135 to 160°. According to an embodiment of the present invention, the camera lens assembly 100 is preferably rotated from the body 10 of the portable terminal 1 at an angle (θ₂) of about 45 to 70°. When the folder 20 and the camera lens assembly 100 have completely rotated from the body 10, an angle (θ₃) between the folder 20 and the camera lens assembly 100 is set to 90°. That is, the screen of the display unit 21 installed in the folder 20 faces a direction that is parallel to the photographing direction of the camera lens assembly 100. Thus, the user can easily photograph the subject or the image by using the portable terminal 1 while positioning the display unit 21 in the vicinity of user's eyes.

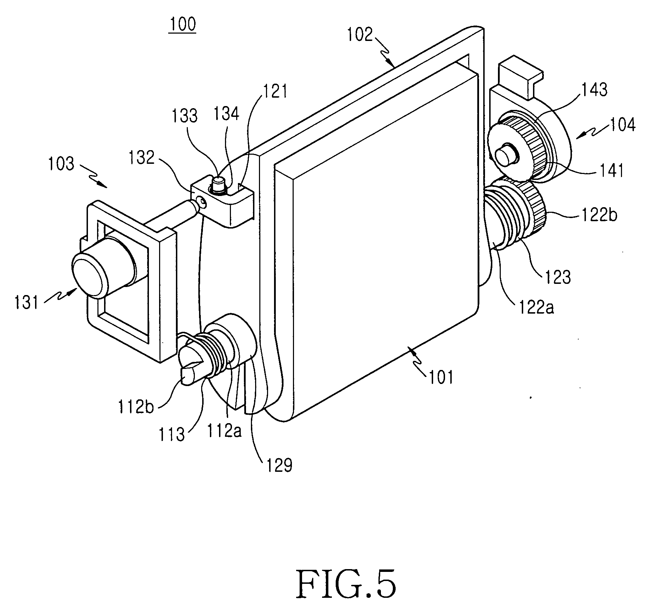

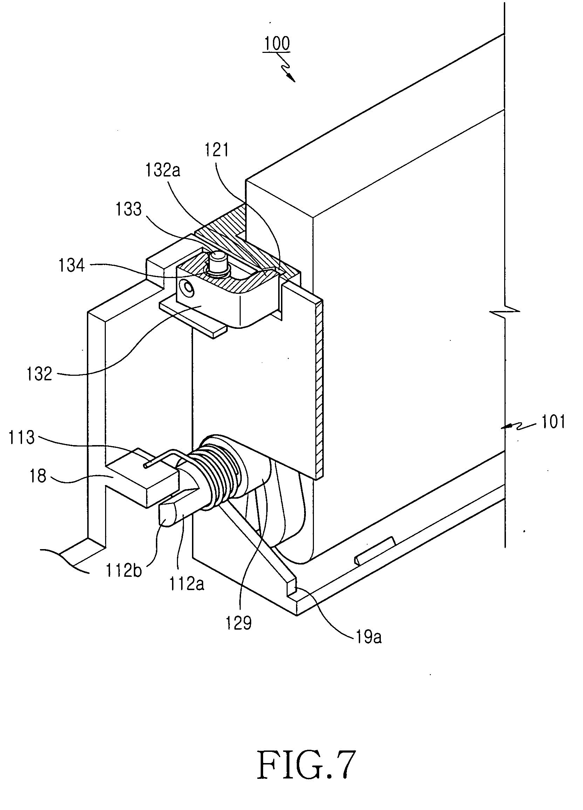

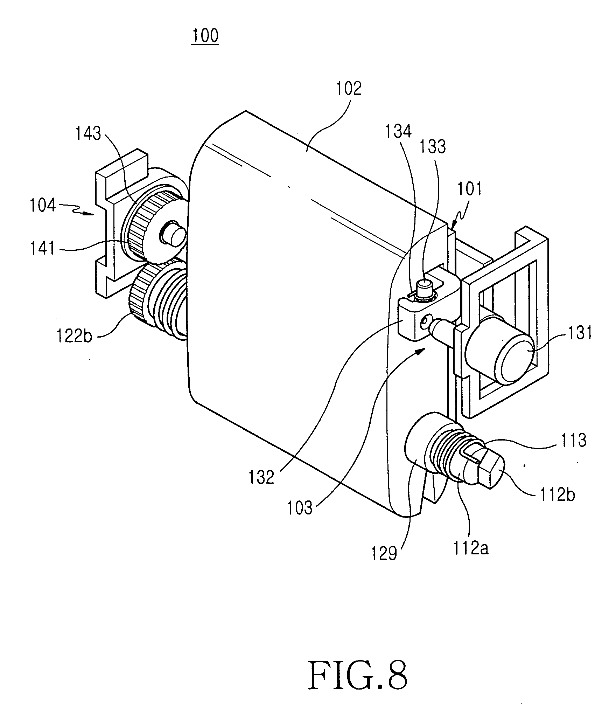

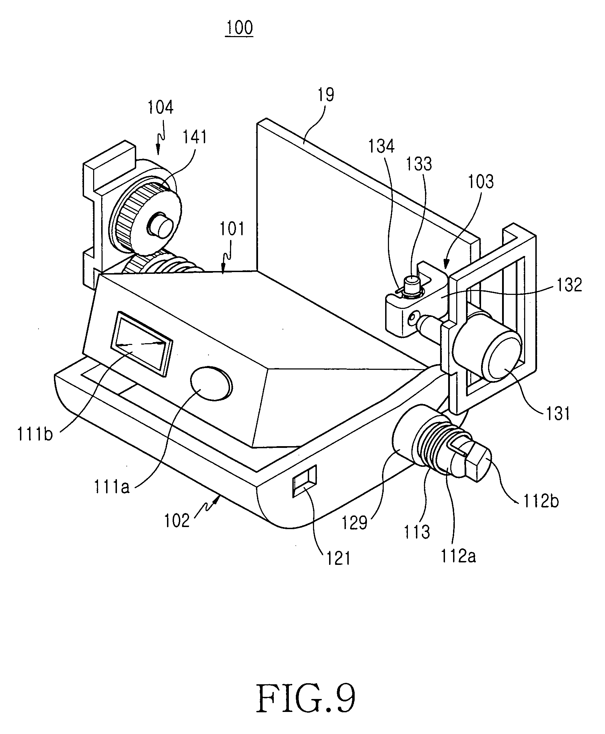

Referring to FIGS. 5-9, the camera lens assembly 100 includes a lens housing 101, a lens cover 102, a locking unit 103, and a damping unit 104.

A camera element (not shown) is installed on the lens housing 101. The lens housing 101 is formed at one side thereof with an opening 111 a for exposing the camera element and a flash 111b used at night. The opening 111a is preferably sealed by suitable means such as transparent acrylic or glass. A first rotating shaft 112a extends from one side of the lens housing 101. The first rotating shaft 112a is rotatably coupled with the body 10 of the portable terminal 1. That is, the first rotating shaft 112a forms a rotating axis of the lens housing 101. The first rotating shaft 112a extends through one side of the lens cover 102 so as to be coupled to an inner portion of the body 10. This will be described later in detail.

A first torsion spring 113 is wound around an outer peripheral portion of the first rotating shaft 112a. One end of the first torsion spring 113 is connected to a predetermined inner peripheral portion of the a body case 10a. The other end of the first torsion spring 113 is inserted into a hole formed in the first rotating shaft 112a. The first torsion spring 113 applies a bias force to the lens housing 101 in such a manner that the lens housing 101 rotatably protrudes from the recess 19 out of the body 10.

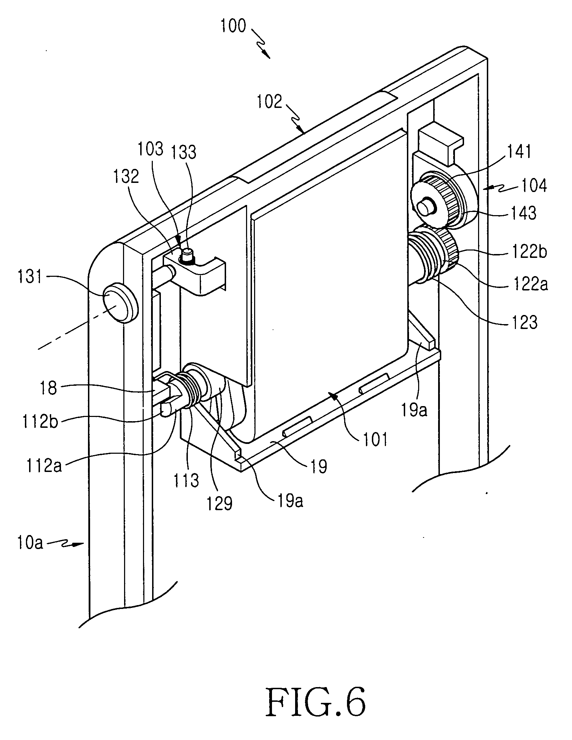

In addition, the first rotating shaft 112a is provided at an end thereof with a stopper 112b extending lengthwise along the first rotating shaft 112a. A stopper rib 18 (see, FIG. 6) extends from an inner peripheral portion of the body case 10a towards the end of the first rotating shaft 112a. When the lens housing 101 is rotated by a predetermined angle due to the elastic force of first torsion spring 113, the stopper 112b makes contact with an end of the stopper rib 18, thereby preventing the lens housing 101 from rotating further.

As mentioned above, the lens housing 101 may be rotated from the body 10 at an angle of about 45 to 70°. This rotation angle of the lens housing 101 relates to the stopper 112 and the stopper rib 18.

The lens cover 102 may surround at least one surface of the lens housing 101, both lateral portions of the lens housing 101, and one end portion of the lens housing 101. The lens cover 102 is rotatably accommodated in the recess 19. At this time, one surface of the lens housing 101 refers to a surface of the lens housing 101 which is aligned in parallel to an outer peripheral surface of the body 10 when the lens housing 101 is accommodated in the recess 19. Accordingly, if the lens housing 101 and the lens cover 102 are accommodated in the recess 19, the lens housing 101 is completely shielded from the exterior by means of the lens cover 102. The rotating angle of the lens cover 102 is larger than the rotating angle of the lens housing 101. Thus, the opening 111a of the lens housing 101 is exposed. As mentioned above, according to an exemplary embodiment of the present invention, the lens housing 101 may be rotated from the body 10 of the portable terminal 1 at an angle of about 45 to 70°. Accordingly, the lens cover 102 preferably rotates from the body 10 by at least 45°; however, the lens cover 102 may be rotated from the body 10 by about 90°.

A rotating base 129 and a second rotating shaft 122a are provided at both lateral portions of the lens cover 102, respectively. The rotating base 129 has a disc plate shape and a predetermined thickness. The rotating base 129 extends along a rotating axis of the lens housing 101 so as to be rotatably inserted into one of holes 19a formed at both sidewalls of the recess 19. The second rotating shaft 122a extends along a rotating axis of the lens housing 101. The second rotating shaft 122a is introduced into an inner portion of the body 10 by passing through the other hole 19a. The first rotating shaft 112 extends into the inner portion of the body 10 by passing through the rotating base 129. Therefore, the rotating base 129 rotatably couples the lens cover 102 to the body 10 while rotatably supporting the first rotating shaft 112a.

A second torsion spring 123 is wound around an outer peripheral portion of the second rotating shaft 122a. Similar to the first torsion spring 113 coupled with the first rotating shaft 112a, one end of the second torsion spring 123 is connected to a predetermined inner peripheral portion of the body case 10a. The other end of the second torsion spring 123 is supported on the second rotating shaft 122a so as to apply bias force to the lens cover 102. That is, the second torsion spring 213 applies bias force to the lens cover 102 in such a manner that the lens housing 101 rotatably protrudes from the recess 19 out of the body 10. Thus, the opening 111a is exposed.

The first and second torsion springs 113, 123 continuously apply a bias force to the lens housing 101 and the lens cover 102, respectively. Thus, the lens housing 101 and the lens cover 102 are rotatably separated from the recess 19. Accordingly, exemplar embodiments of the present invention also provide a locking unit 103 for fixedly maintaining lens housing 101 and the lens cover 102 in the recess 19.

The locking unit 103 includes a locking recess 121 formed on one side of the lens cover 102, a locking hook 132, a third torsion spring 134 and an actuating button 131.

The locking hook 132 is rotatably coupled to a rotating support shaft 133 formed on an inner peripheral portion of the body case 10a. The locking hook 132 extends in one direction from the rotating support shaft 133. One end 132a of the locking hook 132 is bent towards the lens cover 102 so that the one end 132a of the locking hook 132 is engaged with the locking recess 121.

The third torsion spring 134 is wound around an outer peripheral portion of the rotating support shaft 133. One end of the third torsion spring 134 is supported on a predetermined portion of the body case 10a. The other end of the third torsion spring 134 is supported by the locking hook 132. The third torsion spring 134 applies a bias force to the locking hook 132 so that one end of the locking hook 132 can engage the locking recess 121.

The actuating button 131 is elastically coupled to an upper end portion of the body case 10a. Thus, the actuating button 131 can be pressed into or protruded out of the body case 10a. One end of the actuating button 131 is exposed to the exterior at one side of the body 10. The other end of the actuating button 131 makes contact with the other end of the locking hook 132.

The third torsion spring 134 may elastically push the other end of the locking hook 132 so that one end of the actuating button 131 protrudes out of the lateral portion of the body 10. At this time, one end of the actuating button 131 can be aligned in line with the lateral portion of the body 10 depending on the length of the actuating button 132. If one end of the actuating button 131 protrudes substantially out of the lateral portion of the body 10, the actuating button 131 may be erroneously operated by making contact with other objects. In this case, the lens housing 101 is unnecessarily rotated 101.

When the lens housing 101 and the lens cover 102 are accommodated in the recess 19, one end of the locking hook 132 is engaged with the locking recess 121. The other end of the locking hook 132 pushes the actuating button 131, so that one end of the actuating button 131 protrudes out of the lateral portion of the body 10. In this state, if the user pushes the actuating button 131 in order to photograph the subject or the image, the lens housing 101 and the lens cover 102 are rotatably separated from the recess due to bias force of the first and second torsion springs 113 and 123. Thus, the lens housing 101 and the lens cover 102 protrude from the outer peripheral surface of the body 10. At this time, the rotational movement of the lens cover 102 may stop when the lens cover 102 is aligned at a right angle with respect to the body 10. In addition, the stopper 112b makes contact with the stopper rib 18 so that the lens housing 101 rotates within an angle of about 70°, thereby exposing the opening 111a.

The damping unit 104 may reduce the speed of the lens housing 101 and the lens cover 102 when the lens housing 101 and the lens cover 102 are rotatably separated from the recess 19. Consequently, shock is dampened when the lens housing 101 and the lens cover 102 collide with other parts or the outer peripheral portion of the body 10.

The damping unit 104 comprises a gear-tooth section 122b formed on an outer peripheral surface of an end of the second rotating shaft 122a. Moreover, a damping gear 141 is rotatably engaged with the gear-tooth section 122b and a washer 143, which is installed adjacent to the damping gear 141 so as to provide friction for reducing the rotational speed of the second rotating shaft 122a. The damping gear 141 is installed on an inner peripheral portion of the body case 10a while being engaged with the gear-tooth section 122b. Thus, the damping gear 141 may rotate together with the second rotating shaft 122a. At this time, frictional force are generated between the damping gear 141 and the washer 143 in a reverse direction of the bias force of the second torsion spring 123. Consequently, the rotational speed of the second rotating shaft 122a may be reduced.

According to the camera lens assembly 100 and the portable terminal 1 having the same, the lens housing 101 closes the opening 111 a when the camera lens assembly 100 is not in use, thereby protecting the camera element. In addition, the lens housing 101 may simply protrude from the body 10 of the portable terminal 1, so the user can easily use the portable terminal 1.

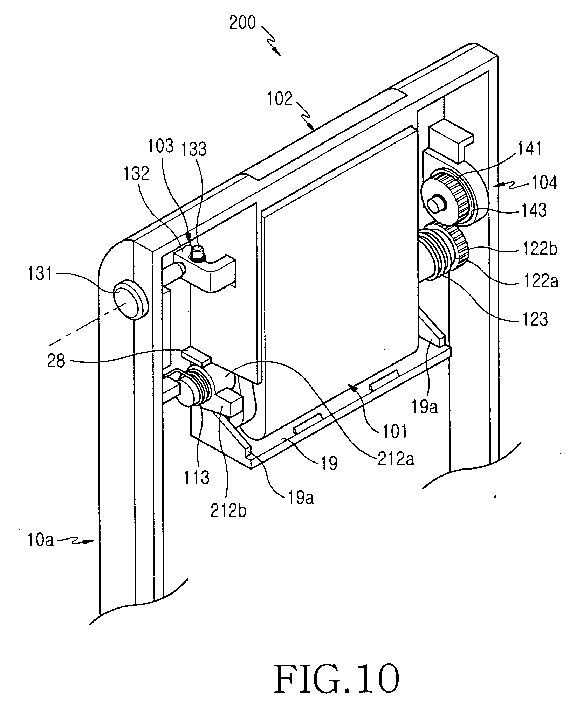

FIG. 10 is a perspective view illustrating an internal structure of the portable terminal 1 equipped with a camera lens assembly 200 according to still another exemplary embodiment of the present invention. Prior to explaining the camera lens assembly 200 shown in FIG. 10, it should be noted that the elements identical to those of the previous embodiment have the same reference numerals and the detailed description thereof will be omitted for clarity and conciseness.

The camera lens assembly 200 shown in FIG. 10 includes a stopper 212b and a stopper rib 28, which are different from those of the previous embodiment. The stopper 212b extends vertically to a rotating axis of the lens housing 101 from an outer peripheral surface of a first rotating shaft 212a. As the lens housing 101 rotates, the stopper 212b rotates in a circumferential direction of the first rotating shaft 212a. At this time, since the stopper rib 28 is formed at an inner peripheral portion of the body case 10a, the rotation of the stopper 212b is restricted by the stopper rib 28. The stopper rib 28 limits the rotational angle of the stopper 212b preferably in a range of about 45 to 70° from an initial position of the stopper 212b. Herein, the initial position of the stopper 212b signifies a position of the stopper 212b when the lens housing 101 is accommodated in the recess 19.

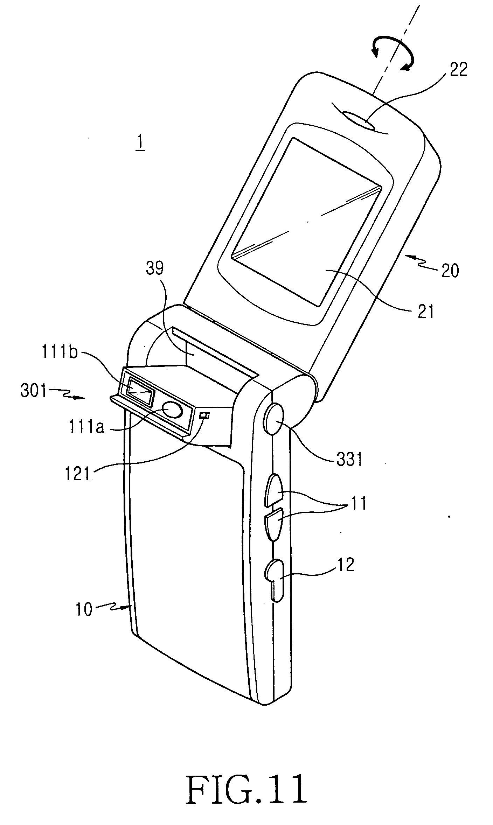

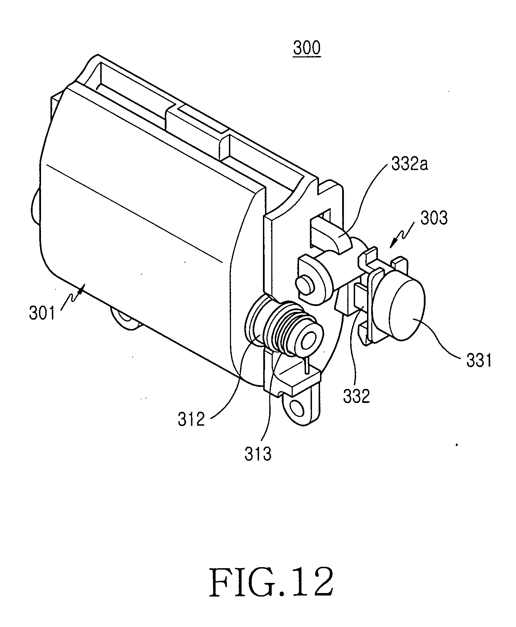

FIG. 11 is a perspective view illustrating a camera lens assembly 300 according to another embodiment of the present invention and a portable terminal 3 having the same, and FIG. 12 is a perspective view illustrating the camera lens assembly 300 of the portable terminal 3 as shown in FIG. 11.

The camera lens assembly 300 is different from the camera lens assemblies 200 and 300 of the previous embodiments in that the lens cover is integrally formed with the lens housing.

When the lens housing 301 is accommodated in a recess 39, the opening 111a and a flash 11 1b formed at one end of the lens housing 301 are not exposed to the exterior. The outer peripheral surface of the lens housing 301 matches with the outer peripheral surface of the body 10, so it seems that the camera lens assembly 300 is not installed in the portable terminal 3.

The camera lens assembly 300 includes the lens housing 301 and a locking unit 303. The lens housing 301 protrudes out of the body 10 by means of a bias force of a torsion coil spring 313 installed on a rotating shaft 312 of the lens housing 301.

The rotating shaft 312 extends from one end of the lens housing 301 and is rotatably coupled with the body 10. One end of the torsion coil spring 313 is supported on the rotating shaft 312 and the other end of the torsion coil spring 313 is connected to an inner peripheral surface of the body 10. In a state that the lens housing 301 is accommodated in the recess 39, the torsion coil spring 313 applies a bias force to the lens housing 301 in such a manner that the lens housing 301 rotatably protrudes out of the body 10.

The locking unit 303 includes an actuating button 331 and a locking hook 332a.

The actuating button 331 is elastically coupled to an upper side portion of the body 10 such that the actuating button 331 can be pressed into or may protrude out from the body 10. One end of the locking hook 332a is preferably bent such that the end of the locking hook 332a is engaged with the locking recess 121 formed at the lateral portion of the lens housing 301. That is, when the lens housing 301 is accommodated in the recess 39, one end of the locking hook 332a is engaged with the locking recess 121.

The actuating button 331 is provided at an inner portion thereof with an actuating protrusion 332. Thus, if the user presses the actuating button 331, the actuating protrusion 332 presses the other end of the locking hook 332a. The locking hook 332a is rotatably coupled to an inner portion of the body 10 in such a manner that the locking hook 332a can be rotated. One end of the locking hook 332a may be separated from the locking recess 121 when the user presses the actuating button 331. As the end of the locking hook 332a is separated from the locking recess 121, a bias force of the torsion coil spring 313 is applied to the lens housing 301 so that the lens housing 301 rotatably protrudes out of the body 10. At this time, a bias force is also applied to the locking hook 332a in a direction of the locking recess 121. The bias force applied to the locking hook 332a is transferred to the actuating button 331 through the other end of the locking hook 332a and the actuating protrusion 332. Thus, the actuating button 331 protrudes from the lateral portion of the body 10.

Although it is not illustrated, a rotational range of the lens housing 301 is preferably limited by the stopper installed on the rotating shaft 312 and the stopper rib formed in the inner peripheral surface of the body 10. Alternatively, the rotational range may be limited by installing a stopper, which makes contact with the outer peripheral portion of the lens housing 301, on the outer peripheral portion of the body 10. In addition, since the lens housing 301 is rotated by means of the bias force of the torsion coil spring 313, a frictional unit or a reduction unit including gears may be provided to reduce the rotational speed of the lens housing 301.

As described above, according to the camera lens assembly and the portable terminal having the same of embodiments of the present invention, the user opens the opening to expose the lens housing only when it is necessary to use the camera lens assembly. That is, the opening is shielded by means of the lens cover when the camera lens assembly is not in use. Consequently, performance of the camera element is not degraded by external light. In addition, since the user can easily open the opening by simply handling the actuating button, so the user can conveniently use the portable terminal

While the invention has been shown and described with reference to certain embodiments thereof, it will be understood by those skilled in the art that various changes in form and details may be made therein without departing from the spirit and scope of the invention as defined by the appended claims. For instance, although the locking unit is installed at one side of the lens housing, the locking unit can be installed at both sides of the lens housing so as to stably maintain the fixing state. In addition, although the exemplary embodiments utilize the folder type portable terminal, the camera lens assembly is also applicable for a bar type portable terminal, a flip type portable terminal, or a sliding type portable terminal. In addition, an internal antenna can be installed in the portable terminal by utilizing the space of the lens housing, which is protrudes out of the body, thereby improving space utilization in the portable terminal.

## Claims

1. A camera lens assembly for a portable terminal having an outer peripheral surface, the camera lens assembly comprising:
a lens housing formed at one end thereof with an opening, the lens housing being rotatably accommodated in the portable terminal such that the lens housing selectively protrudes from the outer peripheral surface of the portable terminal, wherein the opening is exposed to an exterior when the lens housing protrudes out of the outer peripheral surface of the portable terminal.

2. The camera lens assembly as claimed in claim 1, further comprising a first rotating shaft extending along a rotating axis of the lens housing from one end of the lens housing so as to be rotatably coupled with the portable terminal, and a torsion spring is wound around an outer peripheral portion of the first rotating shaft, wherein a first end of the torsion spring is supported on the portable terminal and a second end of the torsion spring is fixed to the first rotating shaft, and the torsion spring applies a bias force to the lens housing so that the lens housing rotatably protrudes from the portable terminal.

3. The camera lens assembly as claimed in claim 2, further comprising a stopper rib formed at an inner peripheral surface of the portable terminal adjacent to an end of the first rotating shaft, and a stopper extends along the rotating axis of the lens housing from one end of the first rotating shaft, wherein the stopper makes contact with the stopper rib when the lens housing is rotated by a predetermined angle, thereby preventing the lens housing from rotating further.

4. The camera lens assembly as claimed in claim 2, further comprising a stopper rib formed at an inner peripheral surface of the portable terminal adjacent to an outer peripheral surface of the first rotating shaft, and a stopper from the outer peripheral surface of the first rotating shaft, wherein the stopper makes contact with the stopper rib when the lens housing is rotated by a predetermined angle, thereby preventing the lens housing from rotating further.

5. The camera lens assembly as claimed in claim 1, further comprising a flash used when photographing an image at night, wherein the flash is provided at one side of the opening.

6. The camera lens assembly as claimed in claim 1, further comprising a recess formed at an outer peripheral surface of the portable terminal, wherein the recess has a shape corresponding to a shape of the lens housing in order to accommodate the lens housing therein.

7. The camera lens assembly as claimed in claim 6, further comprising a locking recess formed at one side of the lens housing, a locking hook rotatably coupled to the portable terminal and having a first end which bends towards the lens housing in order to engage with the locking recess, and a torsion spring to apply a bias force to the locking hook so that the first end of the locking hook is engaged with the locking recess, wherein the first end of the locking hook is engaged with the locking recess when the lens housing is accommodated in the recess.

8. The camera lens assembly as claimed in claim 7, further comprising a rotating shaft formed on the portable terminal, and an actuating button having a first end coupled to one side of the portable terminal so that the first end is pressed into or protrudes from one side of the portable terminal and a second end connected to a second end of the locking hook, wherein a predetermined portion of the locking hook is rotatably coupled to the rotating shaft, and the first end of the locking hook is separated from the locking recess when the actuating button protrudes from one side of the portable terminal.

9. The camera lens assembly as claimed in claim 1, further comprising a lens cover surrounding at least one surface, both sides and one end of the lens housing and being rotatably coupled with the portable terminal.

10. The camera lens assembly as claimed in claim 9, further comprising a first rotating shaft extending along a rotating axis of the lens housing from one end of the lens housing so as to be rotatably coupled with the portable terminal, and a hole formed adjacent to one end of the lens cover so as to allow the first rotating shaft of the lens housing to extend therethrough.

11. The camera lens assembly as claimed in claim 9, wherein, when the lens housing has been rotatably protruded from the outer peripheral surface of the portable terminal, the lens cover rotates with a rotational angle larger than that of the lens housing, thereby exposing the opening to an exterior.

12. The camera lens assembly as claimed in claim 9, further comprising a second rotating shaft extending along the rotational axis of the lens housing from a position adjacent to the second end of the lens cover, and a torsion spring wound around an outer peripheral portion of the second rotating shaft, wherein a first end of the torsion spring is supported on the portable terminal, a second end of the torsion spring is fixed to the second rotating shaft, and the torsion spring applies a bias force to the lens cover so as to rotate the lens cover so that the opening is exposed to an exterior.

13. The camera lens assembly as claimed in claim 9, further comprising a gear-tooth section formed on an outer peripheral surface of an end of the second rotating shaft, a damping gear rotatably installed in the portable terminal so as to rotatably engage with the gear-tooth section, and a washer, which is installed adjacent to the damping gear so as to provide friction for reducing a rotational speed of the second rotating shaft.

14. The camera lens assembly as claimed in claim 9, further comprising a recess formed at an outer peripheral surface of the portable terminal, wherein the recess has a shape corresponding to a shape of the lens cover in order to accommodate the lens cover therein.

15. The camera lens assembly as claimed in claim 14, further comprising a locking recess formed at one side of the lens cover, a locking hook rotatably coupled to the portable terminal and having a first end which is bends towards the lens cover in order to engage with the locking recess, and a torsion spring for applying bias force to the locking hook such that the first end of the locking hook is engaged with the locking recess, wherein the first end of the locking hook is engaged with the locking recess when the lens cover is accommodated in the recess.

16. The camera lens assembly as claimed in claim 15, further comprising a rotating shaft formed on the portable terminal, and an actuating button having a first end coupled to one side of the portable terminal such that the first end is pressed into or protruded from one side of the portable terminal and a second end connected to a second end of the locking hook, wherein a predetermined portion of the locking hook is rotatably coupled to the rotating shaft, and the first end of the locking hook is separated from the locking recess when the actuating button protrudes from one side of the portable terminal.

17. A portable terminal comprising:
a body having a recess; and
a camera lens assembly including a lens housing formed at one end thereof with an opening and rotatably accommodated in the recess formed in the body such that the lens housing selectively protrudes from an outer peripheral surface of the portable terminal, and a lens cover surrounding at least one surface, both sides and one end of the lens housing and being rotatably accommodated in the recess.

18. The portable terminal as claimed in claim 17, wherein, when the lens housing rotatably protrudes from the outer peripheral surface of the portable terminal, the lens cover rotates with a rotational angle larger than that of the lens housing, thereby exposing the opening to an exterior.

19. The portable terminal as claimed in claim 17, wherein the lens housing is integrally formed with the lens cover.

20. The portable terminal as claimed in claim 17, wherein the recess is formed on a rear upper end of the body, a folder is rotatably coupled to a front upper end of the body, and the folder rotatably moves closer to or away from the body while facing the body.

21. The portable terminal as claimed in claim 20, wherein the folder rotates from the body at an angle of about 135° to 160°, the lens housing rotates from the body at an angle of about 70° to 45°, and the folder is aligned at a right angle with respect to the lens housing when the folder is opened and the lens housing simultaneously protrudes from the portable terminal.

22. The portable terminal as claimed in claim 20, wherein the lens cover is rotatably movable from the body at an angle of about 90°.

23. The portable terminal as claimed in claim 20, wherein the folder is rotatable at an angle of about 180° when the folder is substantially open.

24. The portable terminal as claimed in claim 17, wherein the camera lens assembly further comprises a first rotating shaft extending from one side of the lens housing so as to be rotatably coupled with the body by passing through the lens cover, a first torsion spring is wound around an outer peripheral portion of the first rotating shaft and having a first end supported on the portable terminal and a second end fixed to the first rotating shaft so as to apply a bias force to the lens housing so that the lens housing rotatably protrudes from the body of the portable terminal, a second rotating shaft extending along a rotational axis of the lens housing from a position adjacent to the second end of the lens cover, and a second torsion spring wound around an outer peripheral portion of the second rotating shaft and having a first end supported on the portable terminal and a second end fixed to the second rotating shaft so as to apply a bias force to the lens cover so as to rotate the lens cover such that the opening is exposed to an exterior.

25. The portable terminal as claimed in claim 24, wherein the camera lens assembly further comprises a locking recess formed at one side of the lens housing, a locking hook rotatably coupled to the body and having a first end which is bends towards the lens cover in order to engage with the locking recess, and a third torsion spring for applying a bias force to the locking hook such that the first end of the locking hook is engaged with the locking recess, wherein the first end of the locking hook is engaged with the locking recess when the lens cover is accommodated in the recess.

26. The portable terminal as claimed in claim 25, wherein the camera lens assembly further comprises a rotating shaft formed in the body of the portable terminal, and an actuating button having a first end coupled to one side of the portable terminal so that the first end is pressed into or protrudes from one side of the portable terminal and a second end connects to a second end of the locking hook, wherein a predetermined portion of the locking hook is rotatably coupled to the rotating shaft, and the first end of the locking hook is separated from the locking recess when the actuating button protrudes from one side of the portable terminal.

27. The portable terminal as claimed in claim 24, wherein the camera lens assembly further comprises a gear-tooth section formed on an outer peripheral surface of an end of the second rotating shaft, a damping gear is rotatably coupled with the body so as to rotatably engage with the gear-tooth section, and a washer, is installed adjacent to the damping gear so as to provide friction to reduce a rotational speed of the second rotating shaft.
